# EUROPÄISCHE PATENTSCHRIFT

(11) **EP 4 227 598 B1**
(45) Veröffentlichungstag und Bekanntmachung des Hinweises auf die Patenterteilung: **23.10.2024**
(21) Anmeldenummer: 23155032.8
(22) Anmeldetag: 06.02.2023
(51) Int. Cl.: F24S 25/37, H02S 20/22

(54) **SOLARANLAGE MIT POSITIONIERLEISTE**
SOLAR INSTALLATION WITH POSITIONING STRIP
INSTALLATION SOLAIRE DOTÉE D'UNE BAGUETTE DE POSITIONNEMENT

(30) Priorität: 15.02.2022 AT 501032022
(43) Veröffentlichungstag der Anmeldung: 16.08.2023
(73) Patentinhaber: Julius Fritsche GmbH, 5102 Anthering (AT)
(72) Erfinder: Hölzl, Christian, 5020 Salzburg (AT)
(74) Vertreter: Babeluk, Michael

(56) Entgegenhaltungen:
- EP-A1- 3 553 942
- EP-A2- 2 434 230
- DE-A1- 10 136 037
- DE-U1- 202011 101 279
- FR-A1- 2 961 299
- US-A1- 2015 050 074
- US-A1- 2016 365 825
- US-A1- 2017 111 006
- US-B2- 10 432 132
- US-B2- 8 661 747

## Beschreibung

Die Erfindung betrifft eine Solaranlage mit zumindest zwei benachbarten Solar-Paneelen und Befestigungsbalken zum Befestigen der Solaranlage auf einem Untergrund, wobei sich die Befestigungsbalken in einer Querrichtung erstrecken und die Paneele entlang der Befestigungsbalken auf diesen gelagert sind, wobei zwischen zumindest zwei benachbarten Solar-Paneelen eine Positionierleiste angeordnet ist, welche sich im Wesentlichen entlang einer Längsrichtung von einem Befestigungsbalken zu einem anderen Befestigungsbalken erstreckt.

Sie betrifft auch ein Verfahren zum Aufbau einer Solaranlage mit zumindest zwei benachbarten Solar-Paneelen, wobei zuerst Befestigungsbalken entlang einer Querrichtung an einem Untergrund angebracht werden.

In der US 2014/109954 A1 wird eine Solaranlage offenbart, deren Paneele über Positionierleisten an einem Befestigungsbalken angebracht werden. Dabei erstrecken sich die Positionierleisten entlang der Befestigungsbalken. Dies bedingt, dass zwischen den Paneelen Spalten bleiben, wodurch sie stark bei Wind belastet werden. Darüber hinaus können diese Spalten im Brandfall nachteilig sein. Es muss jedes einzelne Paneel beim Aufbau exakt positioniert werden, was mehrmaliges Messen bedingt und zeitaufwändig ist. Die Positionierleisten sind mehrstückig und weisen eine I-Form auf, sie besitzen also auf beiden Seiten vordere Laschen und hintere Laschen, die die Paneele jeweils an der Hinter- und Vorderseite umgreifen und sie so festlegen. Dies bedingt zwar eine feste Verbindung, macht den Aufbau aber schwierig, da die Paneele in die Öffnungen, gebildet durch jeweils eine obere und eine hintere Lasche, eingesteckt werden müssen, was recht umständlich ist.

In einer Ausführung wie oben beschrieben wird durch die rasterförmige Anordnung der Befestigungsbalken und Positionierleisten eine stärkere Grundstruktur bereitgestellt. Der Aufbau ist aber nach wie vor zeitaufwändig und Spalten zwischen den Paneelen können nach wie vor nicht vermieden werden.

In der WO 2019/168412 A1 wird eine Vorrichtung zur Befestigung von mehreren Paneelen offenbart, wobei mehrere Leisten jeweils die einzelnen Paneele festlegen und eine weitere Leiste vorgesehen ist, die mit einer Leiste eines Paneels an der Hinterseite verbunden ist und eine Leiste eines anderen Paneels an der Vorderseite überragt. Dies führt zu einem besseren Regenabfluss, bedingt jedoch einen komplexen Aufbau.

Das Dokument DE10136037A1 offenbart eine Solaranlage gemäß dem Oberbegriff des Anspruchs 1 und ein Verfahren gemäß dem Oberbegriff des Anspruchs 10.

Aufgabe der Erfindung ist es daher, eine möglichst sichere, stabile und einfach zu montierende Ausführungsform bereitzustellen.

Diese Aufgabe wird erfindungsgemäß dadurch gelöst, dass die hintere Lasche zumindest ein Halteelement (4, 15) zum Halten der Positionierleiste an das zweite Paneel durch Hintergreifen eines Teils des zweiten Paneels aufweist.

Sie wird auch dadurch gelöst, dass
a. ein erstes Paneel an den Befestigungsbalken in seine Bestimmungslage gebracht wird und vorzugsweise darauf festgelegt wird;
b. eine Positionierleiste an ein zweites Paneel angebracht wird, indem eine hintere Lasche der Positionierleiste an eine Unterseite des zweiten Paneels angeordnet wird und zumindest ein Halteelement (4, 15) der hinteren Lasche einen Teil des zweiten Paneels hintergreift;
c. das zweite Paneel an die Befestigungsbalken in seine Bestimmungslage gebracht wird, indem eine vordere Lasche der Positionierleiste an der Vorderseite des ersten Paneels angeordnet wird.

Durch die Erstreckung der Positionierleisten in Längsrichtung bilden die Positionierleisten Querverstrebungen, die dem ganzen Aufbau erhöhte Stabilität verleihen und verhindern, dass größere Kräfte durch Windeintrag auf die Paneele wirken. Dabei ist die Positionierleiste vorzugsweise einstückig.

Durch das Anliegen der vorderen und hinteren Lasche an die jeweiligen Paneele wird eine Verbindung der Positionierleiste mit beiden Paneelen sichergestellt. Sie verhindert das Hindurchtreten durch den Spalt zwischen den Paneelen und kann so als Brandschutz sowie gleichzeitig als Regenschutz dienen.

Gleichzeitig ermöglicht diese Konfiguration eine besonders einfache und schnelle Arbeitsweise beim Aufbau. Denn es ist nicht notwendig, dass die Paneele in Klammern, Greifern oder dergleichen der Positionierleiste eingeführt werden. Durch die S-Form wird das Anlegen und Positionieren der Positionierleiste und Paneele zueinander erleichtert und beschleunigt, da auch schräge Annäherungsbewegungen möglich und nicht exakt koordinierte Einsteckvorgänge oder Zusammenfügen mehrerer Teile der Positionierleiste notwendig sind. Es reicht das bloße Anlegen, was die Positionierung wesentlich erleichtert.

Dies kommt auch im erfindungsgemäßen Verfahren zum Tragen. Durch die Anordnung der Positionierleiste an dem zweiten Paneel kann dieses mit wenigen Handgriffen leicht und einfach an das erste Paneel angeschoben und positioniert werden. Die Positionierleiste hilft dabei, die gewünschte Bestimmungslage in Bezug zum ersten Paneel schnell und einfach zu finden.

Wenn im erfindungsgemäßen Verfahren vorgesehen ist, dass die Positionierleiste im Querschnitt eine S-Form aufweist, wird so der Aufbau maßgeblich erleichtert.

Es ist dabei besonders vorteilhaft, wenn eine Hinterseite des ersten Paneels frei von Laschen der Positionierleiste bleibt und/oder wenn die Vorderseite des zweiten Paneels frei von Laschen des Positionierprofils bleibt. Dadurch kann ein einfaches Anlegen der Positionierleiste an die Paneele erreicht werden, gleichzeitig wird aber eine ausreichend sichere und stabile Verbindung über die vordere und hintere Lasche hergestellt. Dabei ist es besonders vorteilhaft, für diese Ausführungsform, wenn die Vorderseite des zweiten Paneels und/oder die Hinterseite des ersten Paneels frei von Laschen bleiben, die eine Länge aufweisen, die mehr als ein Fünftel der Länge der entsprechenden hinteren Lasche oder vorderen Lasche der Positionierleiste ausmachen, die an dem gleichen Paneel anliegt. Kleine klammerartige Verbindungen, die sich nur verhältnismäßig kurz entlang der Längserstreckung der Positionierleiste erstrecken sind dabei wenig störend.

Der Untergrund ist vorzugsweise ein Unterbau wie eine Wand, vorzugsweise eine senkrechte Wand wie eine Fassadenwand eines Gebäudes. Sie kann auch ein Gerüst oder eine schräger Unterbau wie ein Dach zur Aufnahme der Solaranlage sein. Alternativ kann auch der Erdboden oder ein Fundament als Untergrund dienen. Vorzugsweise stehen die Positionierleisten im Wesentlichen horizontal, bezogen auf den Erdboden.

Die Solar-Paneele, in weiterer Folge auch nur mehr Paneele genannt, dienen dabei, Sonnenstrahlung aufzunehmen und in eine nutzbare Energieform umzuwandeln. Dies kann bei Photovoltaikpaneelen elektrischer Strom sein oder bei thermischen Paneelen Wärmeenergie, die einem Fluid, in aller Regel Wasser, zugeführt wird.

Mit Hinterseite ist dabei jene flächige Seite eines Paneels gemeint, welche dazu bestimmt ist, in Richtung des Untergrunds oder Unterbaus zu zeigen. In aller Regel ist die Hinterseite eine solarinaktive Seite.

Mit Vorderseite ist dabei jene flächige Seite eines Paneels gemeint, welche dazu bestimmt ist, in Richtung der Sonne zu zeigen und Energie über die Sonnenstrahlung aufzunehmen. Abhängig davon, ob es sich um ein Photovoltaikpaneel oder ein thermisches Paneel handelt, wird die über die Vorderseite aufgenommene Strahlung entweder in Strom umgewandelt oder ein flüssiges Medium aufgewärmt.

Mit Benachbarung ist dabei gemeint, dass zwei Paneele an zumindest einer Seite nebeneinander oder übereinander angeordnet sind, also Stirnflächen der Paneele einander gegenüberstehen, vorzugsweise auf gleicher Höhe.

Mit einer S-Form ist dabei ein Querschnitt gemeint, der eine mittlere Haupterstreckung aufweist, an deren Endbereichen sich jeweils die hintere Lasche und die vordere Lasche in einem Winkel zur Haupterstreckung in entgegengesetzte Richtungen erstrecken.

Mit Hintergreifen ist dabei gemeint, dass das Halteelement einen Teil des zweiten Paneels zumindest ansatzweise umschließt, womit eine formschlüssige Verbindung hergestellt wird. Mit anderen Worten befindet sich im hintergriffenen Zustand zumindest ein Teil des zweiten Paneels zwischen dem Halteelement und der Positionierleiste.

Zum Hintergreifen kann vorgesehen sein, dass das zweite Paneel eine Einkerbung, Vertiefung oder Nut aufweist. Beispielsweise kann das zweite Paneel einen Rahmen aufweisen, der an der Hinterseite des Paneels das übrige Paneel im Randbereich überragt. Dieses kann leicht von dem Halteelement, beispielsweise durch eine Haltelasche hintergriffen werden.

Mit Anlegen ist dabei gemeint, dass eine Lasche mit einer Oberfläche des Paneels in Wirkverbindung steht, sodass Kräfte zwischen ihnen übertragen werden können. Vorzugsweise liegt dabei die Lasche direkt auf dem Paneel auf. Es kann aber auch vorgesehen sein, dass zumindest ein Zwischenelement wie eine Dichtung zwischen Lasche und Paneel angeordnet ist, um diese Anlegeverbindung abzudichten.

In aller Regel steht die Längsrichtung im Wesentlichen normal zur Querrichtung.

Es kann vorgesehen sein, dass das Halteelement (4, 15) in einem Winkel zu einer Paneelebene des zweiten Paneels steht und vorzugsweise normal zur Paneelebene steht oder zur Positionierleiste zugeneigt ist. Dadurch wird das Hintergreifen leicht möglich.

Es kann auch vorgesehen sein, dass die Positionierleiste einen ersten Anschlag aufweist, an der eine Stirnfläche des ersten Paneels anliegt und/oder dass die Positionierleiste einen zweiten Anschlag aufweist, an der eine Stirnfläche des zweiten Paneels anliegt und dass vorzugsweise der erste Anschlag als eine erste Anschlagskante ausgebildet ist und/oder der zweite Anschlag als eine zweite Anschlagsfläche ausgebildet ist. Dies vereinfacht die exakte Positionierung des zweiten Paneels erheblich. Nachdem die Positionierleiste an dem zweiten Paneel angeordnet wurde, kann dieser Komplex einfach an das erste Paneel herangeschoben werden, bis die vordere Lasche das erste Paneel überragt und schließlich der erste Anschlag am ersten Paneel ansteht und die Bewegung stoppt. So wird das zweite Paneel ideal durch das erste Paneel mitorientiert und zusätzliches Messen wird unnötig.

Alternativ kann auch vorgesehen sein, dass der erste Anschlag als eine erste Anschlagsfläche ausgebildet ist und/oder dass der zweite Anschlag als zweite Anschlagskante ausgebildet ist, oder dass beide Anschläge als Anschlagsflächen oder Anschlagskanten ausgebildet sind.

In einer bevorzugten Ausführungsform ist vorgesehen, dass der erste Anschlag und der zweite Anschlag entlang einer Paneelebene eines Paneels beabstandet sind, sodass zwischen dem ersten Paneel und dem zweiten Paneel ein Spalt entsteht. In diesem Spalt ist dabei die Positionierleiste angeordnet. Dies gilt auch, wenn vorgesehen ist, dass durch die Positionierleiste ein Spalt zwischen den Paneelen eingestellt wird.

Besonders vorteilhaft ist, wenn der erste Anschlag und der zweite Anschlag federnd miteinander verbunden sind. Dadurch wird eine einfache und sichere Verlegung der Paneele ermöglicht und Schäden an den Paneelen durch schnelles Arbeiten verhindert. Darüber hinaus können so Fertigungs- und Befestigungstoleranzen ausgeglichen werden. Dies gilt auch, wenn der Spalt federnd eingestellt wird.

Es kann vorgesehen sein, dass die vordere Lasche und die hintere Lasche über einen Verbindungsast verbunden sind, der schräg zur Paneelebene verläuft und dass vorzugsweise auch der erste Anschlag und der zweite Anschlag über den Verbindungsast verbunden sind. So kann eine Distanzierung der Paneele zueinander entlang einer Paneelebene von einem der Paneele erreicht werden. Vorzugsweise ist der Verbindungsast in Richtung des Erdbodens geneigt, womit das Abführen von Flüssigkeiten aus dem Spalt erleichtert wird.

Mit Paneelebene ist dabei eine Ebene gemeint, in der sich das Paneel hauptsächlich erstreckt. In aller Regel sind die Paneele rechteckige flache Stücke, wobei die Vorderseite und Hinterseite des Paneels parallel zur Paneelebene steht.

Um das Hindurchtreten zwischen den Paneelen zu verhindern oder zu vermindern kann vorgesehen sein, dass die Positionierleiste den Bereich zwischen dem ersten Paneel und dem zweiten Paneel im Wesentlichen vollständig abdeckt. Dies kann einerseits dem Brandschutz zuträglich sein und andererseits Regenwasser oder Schnee vor dem Hindurchtreten hemmen.

Weiters kann vorgesehen sein, dass zwischen der Positionierleiste und zumindest einem Paneel zumindest ein Dichtelement angeordnet ist.

Vorteilhaft ist auch, wenn sich die vordere Lasche im Wesentlichen über die gesamte Länge der Positionierleiste erstreckt und/oder dass sich die hintere Lasche im Wesentlichen über die gesamte Länge der Positionierleiste erstreckt. So kann eine feste Verbindung zum jeweiligen Paneel aufgebaut werden.

Wenn vorgesehen ist, dass in Längsrichtung an den Enden der Positionierleiste Befestigungseinrichtungen zum Befestigen der Positionierleiste an den Befestigungsbalken aufweist, und dass die Befestigungseinrichtungen vorzugsweise Löcher zum Durchführen von Schrauben, Nägeln oder Dübeln umfasst, so kann die Positionierleiste nach dem Bringen in seine Bestimmungslage fest mit dem Befestigungsbalken verbunden werden um nachträgliches Verrücken zu verhindern.

Besonders vorteilhaft ist, wenn die Befestigungseinrichtungen quer zur Längsrichtung der Positionierleiste zueinander versetzt angeordnet ist. So können zwei Positionierleisten in Längsrichtung am gleichen Befestigungsbalken auf gleicher Höhe angeordnet werden, ohne dass sich die Befestigungseinrichtungen im Weg sind.

Weiters kann vorgesehen sein, dass das erste und das zweite Paneel in einer gemeinsamen Paneelebene liegen. Dies bedingt eine einheitliche, flache Ausführungsform.

Besonders vorteilhaft ist, wenn das Halteelement zumindest eine Haltelasche umfasst, welche sich vorzugsweise, entlang der Längsrichtung der Positionierleiste, über die im Wesentlichen gesamte Länge der hinteren Lasche erstreckt. Somit ist eine einfach zu handhabende Ausführungsform gefunden, die durch einfache Handgriffe eine ausreichend feste Positionierung der Positionierleiste an dem zweiten Paneel ermöglicht. Dabei kann vorgesehen sein, dass mehrere Haltelaschen hintereinander entlang der Längsrichtung der Positionierleiste vorgesehen sind. Dies gilt auch, wenn vorgesehen ist, dass das Anbringen der Positionierleiste an das zweite Paneel umfasst, dass zumindest eine Haltelasche des Halteelements einen Teil des zweiten Paneels hintergreift.

Wenn vorgesehen ist, dass das Halteelement zumindest eine Klammer umfasst, die die Positionierleiste mit dem zweiten Paneel verbindet, wobei die Klammer einen Teil der hinteren Lasche mit einem Teil des zweiten Paneels zusammenklemmt, so kann die Verbindung zwischen zweitem Paneel und Positionierleiste sehr gut stabilisiert werden und ein Lösen auch bei schnellerem Hantieren und bei kleineren Krafteinwirkungen verhindert werden. Dies gilt sinngemäß auch, wenn das Anbringen der Positionierleiste an das zweite Paneel umfasst, dass die hintere Lasche mit einem Teil des zweiten Paneels mittels zumindest einer Klammer zusammengeklemmt wird.

Besonders vorteilhaft ist auch, wenn das Halteelement zumindest eine Haltelasche und zumindest eine Klammer umfasst. Die Haltelasche ermöglicht eine besonders schnelle Anlegung der Positionierleiste an dem zweiten Paneel an die richtige Position. Die Klammer verfestigt diese Positionierung weiter und ermöglicht ein besonders schnelles Arbeiten nach dem Anlegen. Somit wird die Arbeit wesentlich erleichtert und beschleunigt was zu einer besonders effizienten Handhabung führt.

In diesem Sinne besonders vorteilhaft ist, wenn die Klammer aus einem umgebogenen Teil der Haltelasche gebildet ist. So sind keine zusätzlichen Teile und eine entsprechende Anordnung derselben notwendig, sondern die Klemmverbindung kann einfach direkt nach dem zusammenfügen hergestellt werden. Dies gilt auch, wenn das Zusammenklemmen der hinteren Lasche mit einem Teil des zweiten Paneels das Umbiegen eines Teils der Haltelasche umfasst.

Es kann auch vorgesehen sein, dass die Haltelasche in zumindest einem Bereich eine Aufnahmeöffnung für die Klammer aufweist. Im Bereich der Aufnahmeöffnung kann die Haltelasche unterbrochen oder deren Höhe verringert sein, sodass die Kalmmer eine gute Verbindung zum zweiten Paneel und der hinteren Lasche aufbauen kann. In diesem Sinne kann auch vorgesehen sein, dass die Klammer nicht einteilig mit der hinteren Lasche ausgeführt ist, mit anderen Worten also, dass die Klammer und die hintere Lasche trennbar ausgeführt sind. Es kann vorgesehen sein, dass die Klammer ein von der hinteren Lasche betriebsmäßig trennbares Element ist. Die Klammer kann beispielsweise als Biegeelement ausgeführt sein, das im angeklemmten Zustand den Teil des zweiten Paneels sowie zumindest einen Teil der hinteren Lasche umgreift und diese somit verbindet. Die Klammer kann auch zumindest eine Schraube zum Zusammenklemmen der Elemente aufweisen. Dazu kann sie beispielsweise einen U-förmigen Umgreifungskörper und zumindest eine entsprechende Schraube aufweisen, die eine Öffnung des Umgreifungskörpers, in die der Teil des zweiten Paneels und der Teil der hinteren Lasche eingeführt ist, verengt und damit die Teile zusammenklemmt.

Es kann auch vorgesehen sein, dass das Halteelement als zumindest eine Schraubenverbindung, eine Dübelverbindung oder eine Klebeverbindung ausgeführt ist oder zumindest eine dieser Verbindungen umfasst. Auch eine Schweißnaht ist denkbar.

Zur Herstellung einer größeren Solaranlage kann vorgesehen sein, dass die Schritte a-c mit zumindest einem weiteren Paneel und zumindest einer weiteren Positionierleiste wiederholt werden, wobei jedes weitere Paneel in Bestimmungslage gebracht wird, indem die vordere Lasche von dessen Positionierleiste an der Vorderseite des zuletzt in Bestimmungslage gebrachten Paneels angeordnet wird. Mit anderen Worten wirkt also bei der Positionierung des weiteren Paneels das weitere Paneel als zweites Paneel und das ursprüngliche zweite Paneel als erstes Paneel. Somit kann ein Paneel nach dem anderen schnell und einfach nacheinander aufgereiht werden.

Um eine besonders feste Konstruktion zu erreichen, ist vorteilhaft, wenn nach dem Bringen des zweiten Paneels in die Bestimmungslage das zweite Paneel und/oder die Positionierleiste an den Befestigungsbalken festgelegt werden. Durch diese Festlegung, also feste Verbindung, wird verhindert, dass äußere Krafteinflüsse wie Wind und dergleichen ein Verrücken der Elemente bedingt.

Weiters kann vorgesehen sein, dass die Befestigungsbalken in Richtung der Paneele zeigende Befestigungszungen aufweisen, welche im Bereich der Positionierleisten ausgespart sind. Diese Befestigungszungen können eine verbesserte Verbindung zu den Paneelen bieten, jedoch zur Befestigung der Positionierleisten hinderlich sein. Die Aussparungen können entweder werksseitig bereitgestellt werden oder vor Ort und nach Bedarf hergestellt werden. Dem entsprechend ist auch vorteilhaft, wenn in Richtung der Paneele zeigende Befestigungszungen der Befestigungsbalken in dem Bereich abgetragen werden, in dem die Positionierleiste angeordnet wird, bevor, die Positionierleiste dort angeordnet wird.

Es kann vorgesehen sein, dass die Befestigungsbalken im Wesentlichen horizontal verlaufen. Mit anderen Worten trennt die Positionierleiste also die Paneelspalten.

Es kann auch vorgesehen sein, dass die Befestigungsbalken zumindest teilweise vertikal verlaufen, also entweder vertikal am Erdboden stehen oder zumindest in einem Winkel zum Erdboden. Mit anderen Worten trennt die Positionierleiste also die Paneelzeilen.

Es kann vorgesehen sein, dass die Positionierleiste zumindest eine Öffnung, vorzugsweise an der hinteren Lasche, aufweist. Vorzugsweise sind mehrere Öffnungen entlang der Längserstreckung der Positionierleiste angeordnet. Weiters kann vorgesehen sein, dass die Öffnung im Verbindungsbereich der hinteren Lasche mit der Positionierleiste angeordnet ist. Dies ermöglicht das Abführen von Wasser. Es kann auch vorgesehen sein, dass die Positionierleiste entlang seiner Längserstreckung mehrere Öffnungen, vorzugsweise an der hinteren Lasche, aufweist.

In weiterer Folge wird die Erfindung anhand nicht einschränkender Ausführungsformen in den Figuren beschrieben. Es zeigen im Detail:
- Fig. 1: eine Seitenansicht einer erfindungsgemäßen Solaranlage in einer ersten Ausführungsform;
- Fig. 2: einen Ausschnitt einer erfindungsgemäßen zweiten Ausführungs-form in einer Seitenansicht;
- Fig. 3: die Positionierleiste der zweiten Ausführungsform alleine in einer Seitenansicht;
- Fig. 4: ein Detail aus Fig. 1 mit einem entfernten Solar-Paneel;
- Fig. 5: ein eine alternative Ausführungsform einer Positionierleiste.

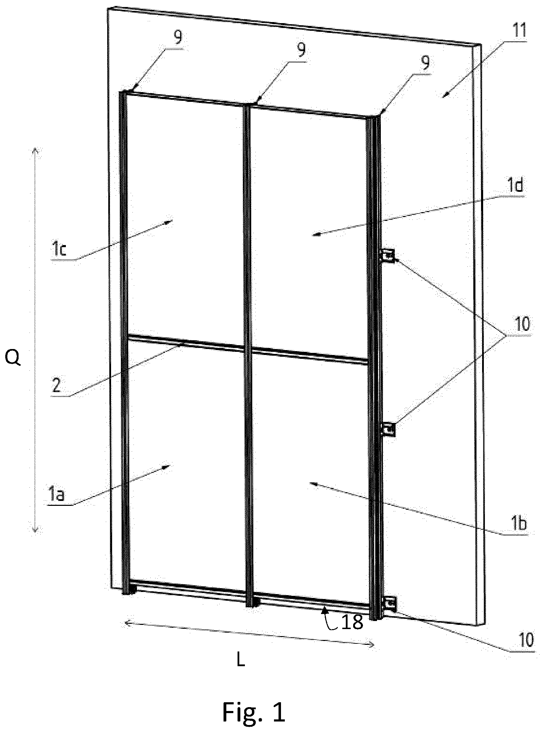

Fig. 1 zeigt eine erste Ausführungsform in einer fertig zusammengebauten Lage auf einer senkrechten Fassade 11 als Untergrund, mit vier Solar-Paneelen 1a, 1b, 1c, 1d, die in zwei Reihen übereinander und in zwei Zeilen nebeneinander angeordnet sind. Dabei benachbart Paneel 1a, die Paneele 1b und 1c, Paneel 1b, die Paneele 1a und 1d, und so weiter. Die Solaranlage ist auf Verbindungsfüßen 10 angeordnet, die sie auf dem Wandbildner 11 abstützen. Mit den Verbindungsfüßen 10 verbunden sind die drei Befestigungsbalken 9, welche sich entlang einer Querrichtung Q erstrecken und im Wesentlichen vertikal verlaufen, also normal zum Erdboden oder der Dachtraufe, sofern ein Dach vorgesehen ist. Sie sind in gleichmäßigen Abständen voneinander angeordnet und die zwei Paneelzeilen erstrecken sich jeweils von einem Befestigungsbalken 9 zum nächstliegenden. Zwischen den Paneelen 1a, 1b, 1c, 1d einer Paneelzeile ist jeweils eine Positionierleiste 2 angeordnet, welche die benachbarten Paneele 1a, 1b, 1c, 1d einer Zeile jeweils miteinander verbindet und den Spalt zwischen ihnen abdeckt. Die Positionierleisten 2 sind teilweise vertikal angeordnet, erstrecken sich entlang einer Längsrichtung L und liegen im Wesentlichen parallel zu den Ortgängen des Gebäudedaches 11. Sie sind entlang der Querrichtung Q auf gleicher Höhe angeordnet. Querrichtung und Längsrichtung stehen dabei in einem Winkel von 90° aufeinander.

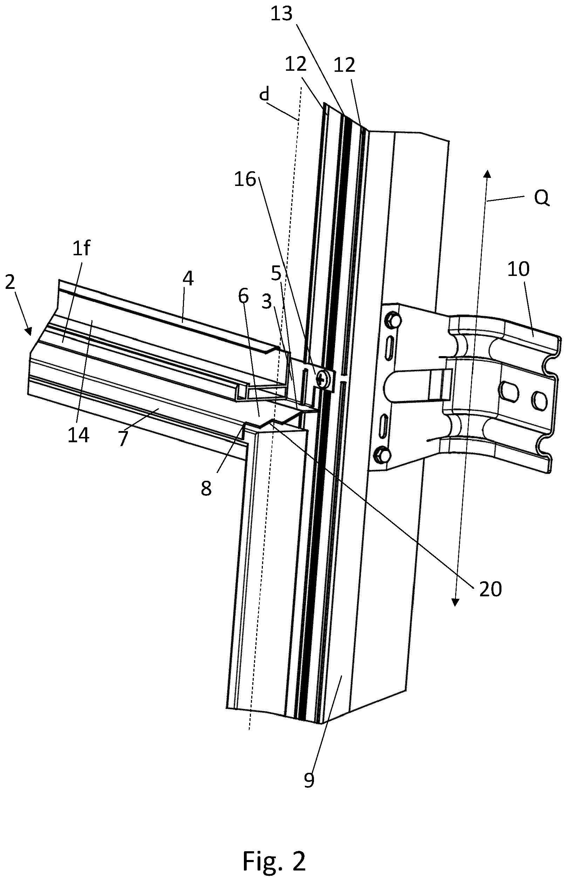

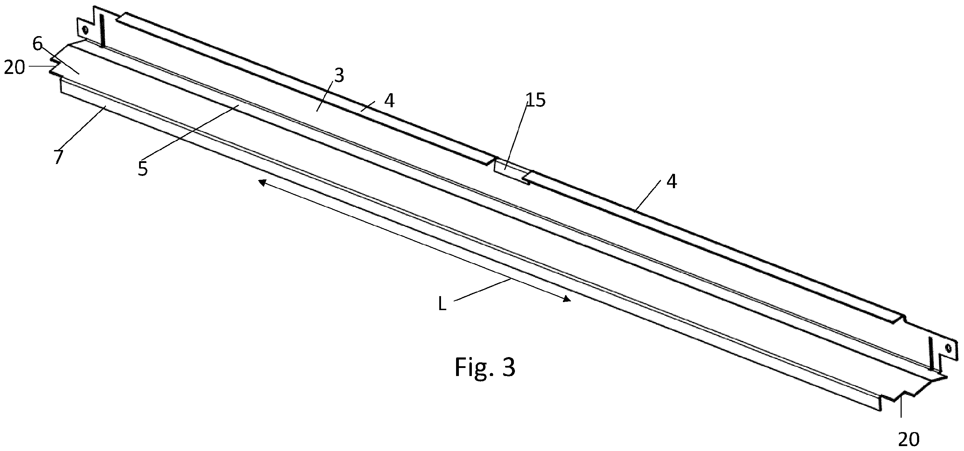

Die Positionierleiste 2 der zweiten Ausführungsform, wie in Fig. 2 und Fig. 3 dargestellt, entspricht den Positionierleisten 2 der ersten Ausführungsform.

In Fig. 2 ist ein Teil eines Befestigungsbalken 9 dargestellt. Dieser weist zwei Befestigungszungen 12 auf, welche sich entlang der Haupterstreckung der Befestigungsbalken 9 erstrecken und auf denen die Paneele 1 im zusammengebauten Zustand aufliegen. Im Bereich der Positionierleiste 2 ist die Befestigungszunge 12 ausgespart, die die Positionierleiste 2 kreuzt. Die Positionierleiste 2 ist über eine endständige Befestigungseinrichtung 16 in Form einer Zunge mit einer Öffnung mit dem Befestigungsbalken 9 verbunden, indem eine Schraube in einem mittigen Schraubenkanal 13 auf der Oberseite des Befestigungsbalkens 9 durch die Zunge eingeschraubt ist.

In Fig. 2 ist nur ein Teil eines zweiten Paneels 1f dargestellt, und zwar ein Teil von dessen Rahmen. In Fig. 3 ist die Positionierleiste alleine dargestellt. Ein erstes Paneel 1e ist zum besseren Überblick in beiden Figuren nicht dargestellt. Die Positionierleiste 2 weist an seiner dem Befestigungsbalken 9 zugewandten Seite eine hintere Lasche 3 auf, welche sich bis auf die Endbereiche der Positionierleiste 2 im Wesentlichen über dessen gesamte Länge erstreckt. Sie erstreckt sich von der Positionierleiste 2 entlang der Querrichtung Q weg und bildet so eine Auflagefläche für das zweite Paneel 1f, das wie durch das dargestellte Teil des zweiten Paneels 1f auf ihr ruht. An seinem entlang der Querrichtung Q von der Positionierleiste 2 entfernten Ende weist die hintere Lasche 3 ein Halteelement auf, das eine Haltelasche 4 umfasst, die im Querschnitt quer zur Querrichtung Q und quer zur Längsrichtung L steht, also sich vom Befestigungsbalken 2 im Querschnitt wegerstreckt. Dabei ist sie zur Positionierleiste 2 geneigt und steht in einem Winkel von 80° zur hinteren Lasche 3. Die Haltelasche 4 weist im Querschnitt eine Länge auf, die etwa einem Fünftel der Länge der restlichen hinteren Lasche 3 ausmacht. In der gezeigten Ausführung weist die vordere Lasche nach unten, also in Richtung Erdboden. Der Verbindungsast 6 ist in dieser Position in Richtung des Erdbodens geneigt, wodurch Wasser über den Verbindungsast 6 aus dem Spalt herausgeleitet wird. Somit übernimmt der Verbindungsast 6 auch eine ableitende Funktion.

Auf der hinteren Lasche 3 ist ein zweites Solarpaneel 1f angeordnet, wobei in Fig. 2 und Fig. 3 nur ein Teil von dessen Rahmen dargestellt ist. An der der hinteren Lasche 3 zugewandten Seite weist das zweite Paneel 1f eine Rahmenlasche 14 auf, die auf der hinteren Lasche 3 aufliegt und sich dort abstützt. Sie wird weiters von der Haltelasche 4 hintergriffen, sodass sich eine formschlüssige Verbindung zwischen dem zweiten Paneel 1f und der Positionierleiste 2 ergibt.

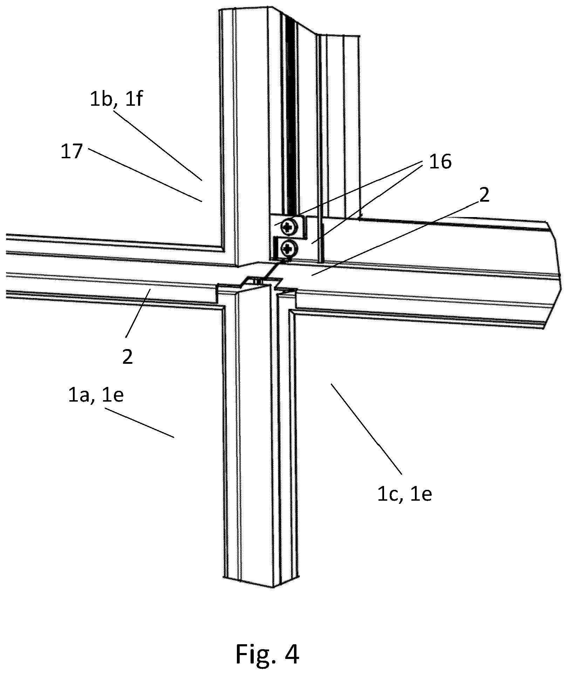

In Fig. 2 und Fig. 4 ist sichtbar, dass an den Enden der Positionierleiste 2 der an der vorderen Lasche 7 grenzende Bereich eine Ausnehmung 20 aufweist. Dadurch ergibt sich bei einer Anordnung hintereinander wie aus Fig. 4 ersichtlich eine Öffnung entlang der Befestigungsbalken 9, in die eine Deckleiste (nicht dargestellt) eingesetzt wird, um den Spalt entlang der Befestigungsbalken 9 abzudecken.

Von der hinteren Lasche 3 erstreckt sich vom Befestigungsbalken 9 weg ein Teil der Positionierleiste 2, der normal zur hinteren Lasche 3 steht. Dadurch liegt das zweite Paneel 1f an diesem Teil an und wirkt als zweiter Anschlag 5, der als Anschlagsfläche ausgeführt ist und an der die Stirnseite des Rahmens des zweiten Paneels 1f anliegt. Somit wird ein Teil des zweiten Paneels 1f von drei Seiten von der Positionierleiste 2 umfasst. Im Querschnitt von dem Befestigungsbalken weg schließt an dem zweiten Anschlag 5 ein Verbindungsast 6 an, der zu einer Paneelebene P im Querschnitt schräg verläuft. Der Verbindungsast 6 schließt an seinem im Querschnitt gegenüberliegenden Ende eine vordere Lasche 7 an, die im Wesentlichen parallel zur hinteren Lasche 3 steht. Durch diese schräge Anordnung in einem Winkel von etwa 60° bewirkt der Verbindungsast 6 eine Beabstandung der hinteren Lasche 3 und vorderen Lasche 7 in Querrichtung Q, wodurch ein Spalt zwischen den Paneelen 1e, 1f entsteht. Dieser wird durch die Laschen 3, 7, den zweiten Anschlag 5 und den Verbindungsast 6 abgedeckt, die sich allesamt über die gesamte Länge der Paneele 1e, 1f in Längsrichtung erstrecken. Andererseits bedingt die schräge Anordnung eine Federwirkung, die die Paneele 1e, 1f gegeneinander abfedert. Im Übergangsbereich zwischen Lasche 7 und Verbindungs-ast 6 ist ein erster Anschlag 8 in Form einer Anschlagskante gebildet, die sich durch die Biegung der beiden Elemente ergibt. Wird die Positionierleiste 2 zusammen mit dem zweiten Paneel 1f in Richtung des ersten Paneels 1e geschoben oder gebracht, so schiebt sich die vordere Lasche 7 über das erste Paneel 1e, bis dieses am ersten Anschlag 8 ansteht. Es kann auch vorgesehen sein, dass zwischen Verbindungsast 6 und erstem Paneel 1e ein Freibereich bleibt.

In Fig. 3 ist die Positionierleiste 2 auf mittlerer Höhe seiner Längserstreckung gezeigt. Dabei ist die Haltelasche 4 für einen kurzen Teil entlang der Längserstreckung der Positionierleiste 2 unterbrochen, sodass die hintere Lasche 3 bündig mit der Rahmenlasche 14 abschließt. In diesem Bereich ist eine Klammer 15 eingesetzt, welche die Rahmenlasche 14 und die hintere Lasche 3 zusammenhält.

In Fig. 4 ist der Treffpunkt von vier Paneelen gezeigt, wobei ein Paneel 1d zur besseren Ansicht nicht dargestellt ist. Dabei ist sichtbar, dass ein Paneel 1b einer ersten Paneelzeile auf der hintere Lasche 3 einer Positionierleiste 2 aufliegt, während ein benachbartes Paneel 1a an der Unterseite der vorderen Lasche 7 dieser Positionierleiste 2 anliegt. Damit stellt für diese Positionierleiste 2 das Paneel 1b das zweite Paneel 1f und das andere Paneel 1a das erste Paneel 1e dar. Dasselbe gilt für die andere dargestellte Positionierleiste 2, für die Paneel 1c das erste Paneel 1e darstellt. Dabei ist sichtbar, dass die vorderen Laschen 7 an Vorderseiten 17 zweiter Paneele 1b, 1d anliegen und die hinteren Laschen 3 an Hinterseiten 18 der anderen zwei Paneele 1a, 1c anliegen. Alle Paneele liegen auf einer Ebene, damit fallen all ihre Paneelebenen ineinander.

Die Positionierleisten 2 sind entlang der Querrichtung Q auf gleicher Höhe angeordnet, wobei deren Befestigungseinrichtungen 16 derart zueinander versetzt sind, dass sie einander nicht im Weg sind, also nebeneinander am Befestigungsbalken 9 anliegen. Die Schrauben, die sie mit dem Befestigungsbalken 9 verbinden sind ebenso nicht dargestellt.

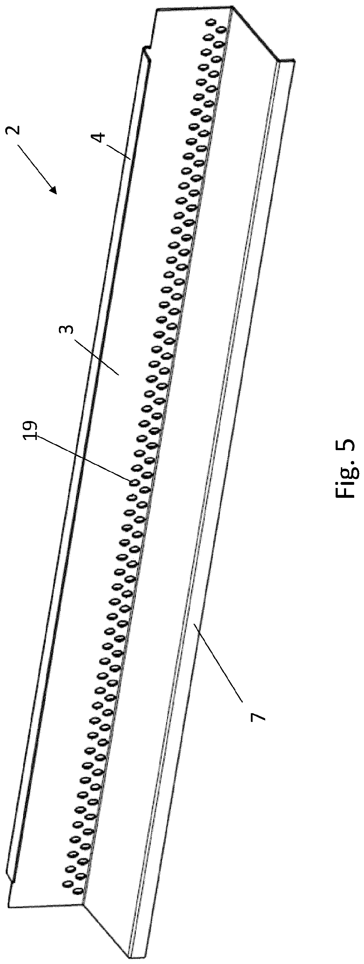

Fig. 5 zeigt eine alternative Ausführungsform einer Positionierleiste 2, die keinen Verbindungsast 6 aufweist. Stattdessen ist ein Grundkörper der Positionierleiste 2 im Querschnitt im Wesentlichen gerade ausgeführt und verbindet die vordere und hintere Lasche 3, 7 miteinander. Somit wirkt der Grundkörper an der einen Seite als erster Anschlag und an der anderen Seite als zweiter Anschlag. Die hintere Lasche 3 weist entlang des Verbindungsbereichs mit dem Grundkörper mehrere Öffnungen 19 auf, welche das Wasser nach hinten ableiten kann.

## Patentansprüche

1. Solaranlage mit zumindest zwei benachbarten Solar-Paneelen (1, a, 1b, 1c, 1d, 1e, 1f) und Befestigungsbalken (9) zum Befestigen der Solaranlage auf einem Untergrund, wobei sich die Befestigungsbalken (9) in einer Querrichtung (Q) erstrecken und die Paneele (1, a, 1b, 1c, 1d, 1e, 1f) entlang der Befestigungsbalken (9) auf diesen gelagert sind, wobei zwischen zumindest zwei benachbarten Solar-Paneelen (1, a, 1b, 1c, 1d, 1e, 1f) eine Positionierleiste (2) angeordnet ist, welche sich im Wesentlichen entlang einer Längsrichtung (L) von einem Befestigungsbalken (9) zu einem anderen Befestigungsbalken (9) erstreckt, wobei die Positionierleiste (2) im Querschnitt eine S-Form aufweist und eine vordere Lasche (7) zum Anlegen an der Vorderseite (17) eines ersten benachbarten Paneels (1e) und eine hintere Lasche (3) zum Anlegen an der Hinterseite (18) eines zweiten benachbarten Paneels (1f) aufweist, **dadurch gekennzeichnet, dass** die hintere Lasche (3) zumindest ein Halteelement (4, 15) zum Halten der Positionierleiste (2) an das zweite Paneel (1f) durch Hintergreifen eines Teils des zweiten Paneels (1f) aufweist.

2. Solaranlage nach Anspruch 1, **dadurch gekennzeichnet, dass** die Positionierleiste (2) einen ersten Anschlag (8) aufweist, an der eine Stirnfläche des ersten Paneels (1e) anliegt und/oder dass die Positionierleiste (2) einen zweiten Anschlag (5) aufweist, an der eine Stirnfläche des zweiten Paneels (1f) anliegt und dass vorzugsweise der erste Anschlag (8) als eine erste Anschlagskante ausgebildet ist und/oder der zweite Anschlag (5) als eine zweite Anschlagsfläche ausgebildet ist und dass vorzugsweise vorgesehen ist, dass der erste Anschlag (8) und der zweite Anschlag (5) entlang einer Paneelebene (P) eines Paneels (1, a, 1b, 1c, 1d, 1e, 1f) beabstandet sind, sodass zwischen dem ersten Paneel (1e) und dem zweiten Paneel (1f) ein Spalt liegt.

3. Solaranlage nach Anspruch 2, **dadurch gekennzeichnet, dass** der erste Anschlag (8) und der zweite Anschlag (5) federnd miteinander verbunden sind.

4. Solaranlage nach einem der Ansprüche 1 bis 3, **dadurch gekennzeichnet, dass** die vordere Lasche (7) und die hintere Lasche (3) über einen Verbindungsast (6) verbunden sind, der schräg zur Paneelebene (P) verläuft und dass vorzugsweise auch der erste Anschlag (8) und der zweite Anschlag (5) über den Verbindungsast (6) verbunden sind.

5. Solaranlage nach einem der Ansprüche 1 bis 4, **dadurch gekennzeichnet, dass** in Längsrichtung an den Enden der Positionierleiste (2) Befestigungseinrichtungen (16) zum Befestigen der Positionierleiste (2) an den Befestigungsbalken (9) aufweist, und dass die Befestigungseinrichtungen (16) vorzugsweise Löcher zum Durchführen von Schrauben, Nägeln oder Dübeln umfassen.

6. Solaranlage nach Anspruch 5, **dadurch gekennzeichnet, dass** die Befestigungseinrichtungen (16) quer zur Längsrichtung der Positionierleiste (2) zueinander versetzt angeordnet sind.

7. Solaranlage nach einem der Ansprüche 1 bis 6, **dadurch gekennzeichnet, dass** das Halteelement zumindest eine Haltelasche umfasst, welche sich vorzugsweise entlang der Längsrichtung der Positionierleiste über die im Wesentlichen gesamte Länge der hinteren Lasche erstreckt.

8. Solaranlage nach einem der Ansprüche 1 bis 7, **dadurch gekennzeichnet, dass** das Halteelement zumindest eine Klammer (15) umfasst, die die Positionierleiste (2) mit dem zweiten Paneel (1f) verbindet, wobei die Klammer (15) einen Teil der hinteren Lasche (3) mit einem Teil des zweiten Paneels (1e) zusammenklemmt.

9. Solaranlage nach einem der Ansprüche 1 bis 8, **dadurch gekennzeichnet, dass** die Befestigungsbalken (9) in Richtung der Paneele (1, a, 1b, 1c, 1d, 1e, 1f) zeigende Befestigungszungen (12) aufweisen, welche im Bereich der Positionierleisten (2) ausgespart sind.

10. Verfahren zum Aufbau einer Solaranlage mit zumindest zwei benachbarten Solar-Paneelen (1, a, 1b, 1c, 1d, 1e, 1f), wobei zuerst Befestigungsbalken (9) entlang einer Querrichtung (Q) an einem Untergrund angebracht werden, **dadurch gekennzeichnet, dass**
a. ein erstes Paneel (1e) an den Befestigungsbalken (9) in seine Bestimmungslage gebracht wird und vorzugsweise darauf festgelegt wird;
b. eine Positionierleiste (2) an ein zweites Paneel (1f) angebracht wird, indem eine hintere Lasche (3) der Positionierleiste (2) an eine Hinterseite (18) des zweiten Paneels (1f) angeordnet wird und zumindest ein Halteelement (4, 15) einen Teil des zweiten Paneels (1f) hintergreift;
c. das zweite Paneel (1f) an die Befestigungsbalken (9) in seine Bestimmungslage gebracht wird, indem eine vordere Lasche (7) der Positionierleiste (2) an der Vorderseite (17) des ersten Paneels (1e) angeordnet wird.

11. Verfahren nach Anspruch 10, **dadurch gekennzeichnet, dass** die Schritte a-c mit zumindest einem weiteren Paneel und zumindest einer weiteren Positionierleiste (2) wiederholt werden, wobei jedes weitere Paneel in Bestimmungslage gebracht wird, indem die vordere Lasche (7) von dessen Positionierleiste (2) an der Vorderseite (17) des zuletzt in Bestimmungslage gebrachten Paneels angeordnet wird.

12. Verfahren nach Anspruch 10 oder 11, **dadurch gekennzeichnet, dass** durch die Positionierleiste (2) ein Spalt zwischen den Paneelen (1, a, 1b, 1c, 1d, 1e, 1f) eingestellt wird, wobei der Spalt vorzugsweise federnd eingestellt wird.

13. Verfahren nach einem der Ansprüche 10 bis 12, **dadurch gekennzeichnet, dass** nach dem Bringen des zweiten Paneels (1f) in die Bestimmungslage das zweite Paneel (1f) und/oder die Positionierleiste (2) an den Befestigungsbalken (9) festgelegt werden.

14. Verfahren nach einem der Ansprüche 10 bis 13, **dadurch gekennzeichnet, dass** das Anbringen der positionierleiste (2) an das zweite Paneel (1f) umfasst, dass zumindest eine Haltelasche (4) des Halteelements (4, 15) einen Teil des zweiten Paneels (1f) hintergreift.

15. Verfahren nach einem der Ansprüche 10 bis 14, **dadurch gekennzeichnet, dass** das Anbringen der Positionierleiste (2) an das zweite Paneel (1f) umfasst, dass die hintere Lasche (3) mit einem Teil des zweiten Paneels (1f) mittels zumindest einer Klammer (15) zusammengeklemmt wird und dass vorzugsweise vorgesehen ist, dass das Zusammenklemmen der hinteren Lasche (3) mit einem Teil des zweiten Paneels (1f) das Umbiegen eines Teils der Haltelasche (4) umfasst.

## Claims

1. Solar installation having at least two adjacent solar panels (1, a, 1b, 1c, 1d, 1e, 1f) and fastening beams (9) for fastening the solar installation to a substrate, wherein the fastening beams (9) extend in a transverse direction (Q) and the panels (1, a, 1b, 1c, 1d, 1e, 1f) are mounted on the fastening beams (9) along the latter, wherein a positioning strip (2) is arranged between at least two adjacent solar panels (1, a, 1b, 1c, 1d, 1e, 1f), which positioning strip (2) extends substantially along a longitudinal direction (L) from one fastening beam (9) to another fastening beam (9), wherein the positioning strip (2) has an S-shape in cross-section and has a front tab (7) for abutment against the front side (17) of a first adjacent panel (1e) and a rear tab (3) for abutment against the rear side (18) of a second adjacent panel (1f), **characterised in that** the rear tab (3) has at least one retaining element (4, 15) for retaining the positioning strip (2) on the second panel (1f) by engaging behind a part of the second panel (1f).

2. Solar installation according to claim 1, **characterised in that** the positioning strip (2) has a first stop (8) against which an end face of the first panel (1e) rests and/or **in that** the positioning strip (2) has a second stop (5), against which an end face of the second panel (1f) rests, and **in that** preferably the first stop (8) is designed as a first stop edge and/or the second stop (5) is designed as a second stop face, and **in that** it is preferably provided that the first stop (8) and the second stop (5) are spaced apart along a panel plane (P) of a panel (1, a, 1b, 1c, 1d, 1e, 1f), so that there is a gap between the first panel (1e) and the second panel (1f).

3. Solar installation according to claim 2, **characterised in that** the first stop (8) and the second stop (5) are resiliently connected to one another.

4. Solar installation according to one of claims 1 to 3, **characterised in that** the front tab (7) and the rear tab (3) are connected via a connecting branch (6) which extends obliquely to the panel plane (P) and **in that** preferably the first stop (8) and the second stop (5) are also connected via the connecting branch (6).

5. Solar installation according to one of claims 1 to 4, **characterised in that** fastening devices (16) for fastening the positioning strip (2) to the fastening beams (9) are provided at the ends of the positioning strip (2) in the longitudinal direction, and **in that** the fastening devices (16) preferably comprise holes for passing through screws, nails or dowels.

6. Solar installation according to claim 5, **characterised in that** the fastening devices (16) are arranged offset to one another transversely to the longitudinal direction of the positioning strip (2).

7. Solar installation according to one of claims 1 to 6, **characterised in that** the retaining element comprises at least one retaining tab, which preferably extends along the longitudinal direction of the positioning strip over substantially the entire length of the rear tab.

8. Solar installation according to one of claims 1 to 7, **characterised in that** the retaining element comprises at least one clip (15) which connects the positioning strip (2) to the second panel (1f), wherein the clip (15) clamps together a part of the rear tab (3) with a part of the second panel (1e).

9. Solar installation according to one of claims 1 to 8, **characterised in that** the fastening beams (9) have fastening tongues (12) facing in the direction of the panels (1, a, 1b, 1c, 1d, 1e, 1f), which are recessed in the region of the positioning strips (2).

10. Method for constructing a solar installation having at least two adjacent solar panels (1, a, 1b, 1c, 1d, 1e, 1f), wherein fastening beams (9) are first attached to a substrate along a transverse direction (Q),
**characterised in that**
a. a first panel (1e) is brought into its intended position on the fastening beams (9) and is preferably fixed thereto;
b. a positioning strip (2) is attached to a second panel (1f) **in that** a rear tab (3) of the positioning strip (2) is arranged on a rear side (18) of the second panel (1f) and at least one retaining element (4, 15) engages behind a part of the second panel (1f);
c. the second panel (1f) is brought into its intended position on the fastening beams (9) by arranging a front tab (7) of the positioning strip (2) on the front side (17) of the first panel (1e).

11. Method according to claim 10, **characterised in that** steps a-c are repeated with at least one further panel and at least one further positioning strip (2), wherein each further panel is brought into its intended position by arranging the front tab (7) of its positioning strip (2) on the front side (17) of the panel last brought into its intended position.

12. Method according to claim 10 or 11, **characterised in that** a gap between the panels (1, a, 1b, 1c, 1d, 1e, 1f) is set by the positioning strip (2), wherein the gap is preferably set in a resilient manner.

13. Method according to one of claims 10 to 12, **characterised in that** after the second panel (1f) has been brought into the intended position, the second panel (1f) and/or the positioning strip (2) are fixed to the fastening beams (9).

14. Method according to one of claims 10 to 13, **characterised in that** the attachment of the positioning strip (2) to the second panel (1f) comprises that at least one retaining tab (4) of the retaining element (4, 15) engages behind a part of the second panel (1f).

15. Method according to one of claims 10 to 14, **characterised in that** the attachment of the positioning strip (2) to the second panel (1f) comprises that the rear tab (3) is clamped together with a part of the second panel (1f) by means of at least one clamp (15) and **in that** it is preferably provided that the clamping together of the rear tab (3) with a part of the second panel (1f) comprises the bending of a part of the retaining tab (4).

## Revendications

1. Installation solaire comportant au moins deux panneaux solaires (1a, 1b, 1e, 1d, 1e, 1f), voisins et des poutres de fixation (9) pour fixer l'installation solaire sur un support,
- les poutres de fixation (9) s'étendant dans une direction transversale (Q) et les panneaux (1a, 1b, 1e, 1d, 1e, 1f) étant fixés le long des parties de fixation,
- une baguette de positionnement (2) étant prévue entre deux panneaux (1a, 1b, 1e, 1d, 1e, 1f) qui s'étend pratiquement dans la direction longitudinale (L) d'une poutre de fixation (9) à une autre poutre de fixation (9),
- la baguette de positionnement (2) ayant en section une forme en S avec une patte avant (7) pour s'appliquer contre le côté avant (17) d'un premier panneau (1e) voisin et une patte arrière (3) pour s'appliquer contre le côté arrière (18) d'un second panneau voisin (11),
installation **caractérisée en ce que**
la patte arrière (3) comporte au moins un élément de maintien (4, 15) pour tenir la baguette de positionnement (2) contre le second panneau (1f) en traversant une partie du second panneau (1f).

2. Installation solaire selon la revendication 1,
**caractérisée en ce que**
- la baguette de positionnement (2) a une première butée (8) contre 1a-quelle s'appuie la face frontale du premier panneau (1e) et/ou la baguette de positionnement (2) a une seconde butée (5) contre laquelle s'appuie la surface frontale du second panneau (1f), et
- de préférence, la première butée (8) est réalisée sous la forme d'une première arête de butée et/ou la seconde butée (5) est réalisée comme seconde surface de butée, et
il est prévu de préférence que la première butée (8) et la seconde butée (5) sont écartées le long du plan (P) d'un panneau (1a, 1b, 1e, 1d, 1e, 1f) de façon à avoir un intervalle entre le premier panneau (1e) et le second panneau (1f).

3. Installation solaire selon la revendication 2,
**caractérisée en ce que**
la première butée (8) et la seconde butée (5) sont reliées de manière élastique.

4. Installation solaire selon l'une des revendications 1 à 3,
**caractérisée en ce que**
la patte avant (7) et la patte arrière (3) sont reliées par une branche de liaison (6) qui est inclinée par rapport au plan (P) du panneau et de préférence également la première butée (8) et la seconde butée (5) sont reliées par cette branche de liaison (6).

5. Installation solaire selon l'une des revendications 1 à 4,
**caractérisée en ce que**
- selon la direction longitudinale, les extrémités de la baguette de positionnement (2) sont des installations de fixation (16) pour fixer la baguette de positionnement (2) aux poutres de fixation (9), et
- les installations de fixation (16) ont, de préférence, des trous pour le passage de vis, de clous ou de chevilles.

6. Installation solaire selon la revendication 5,
**caractérisée en ce que**
les installations de fixation (16) sont décalées l'une par rapport à l'autre transversalement à la direction longitudinale de la baguette de positionnement (2).

7. Installation solaire selon l'une des revendications 1 à 6,
**caractérisée en ce que**
l'élément de maintien comprend au moins une patte de maintien qui s'étend de préférence selon la direction longitudinale de la baguette de positionnement sur pratiquement toute la longueur de la patte arrière.

8. Installation solaire selon l'une des revendications 1 à 7,
**caractérisée en ce que**
l'élément de maintien comprend au moins une pince (15) qui relie la baguette de positionnement (2) au second panneau (1f), la pince (15) serrant une partie de la première patte (3) à une partie du second panneau (1e).

9. Installation solaire selon l'une des revendications 1 à 8,
**caractérisée en ce que**
les poutres de fixation (9) ont des languettes de fixation (12) orientées dans la direction des panneaux (1a, 1b, 1e, 1d, 1e, 1f) et qui sont évidés dans la région des lames de positionnement (2).

10. Procédé de montage d'une installation solaire comprenant au moins deux panneaux solaires voisins (1a, 1b, 1e, 1d, 1e, 1f), selon lequel on installe tout d'abord à un support des poutres de fixation (9) selon la direction transversale (Q),
procédé **caractérisé en ce que**
a. on met un premier panneau (1e) contre la poutre de fixation (9) dans sa position déterminée et on le fixe de préférence dessus,
b. on installe une baguette de positionnement (2) à un second panneau (1f) en installant une patte arrière (3) de la baguette de positionnement (2) contre le côté arrière (18) du second panneau (1f) et au moins un élément de maintien (4, 15) prend par derrière une partie du second panneau (1f),
c. on installe le second panneau (1f) contre les poutres de fixation (9) dans sa position définie, en mettant une patte avant (7) de la baguette de positionnement (2) contre la face avant (17) du premier panneau (1e).

11. Procédé selon la revendication 10,
**caractérisé en ce que**
on répète les étapes a-c pour au moins un autre panneau et au moins une autre baguette de positionnement (2), chaque autre panneau étant mis dans une position déterminée en appliquant la patte avant (7) de sa baguette de positionnement (2) contre le côté avant (17) du dernier panneau mis dans la position déterminée.

12. Installation solaire selon la revendication 10 ou 11,
**caractérisée en ce que**
la baguette de positionnement (2) règle un intervalle entre les panneaux (1a, 1b, 1e, 1d, 1e, 1f), l'intervalle se réglant de préférence de manière élastique.

13. Installation solaire selon l'une des revendications 10 à 12,
**caractérisée en ce que**
après mise en place du second panneau (1f) dans la position déterminée, on fixe le second panneau (1f) et/ou la baguette de positionnement (2) à la poutre de fixation (9).

14. Installation solaire selon l'une des revendications 10 à 13,
**caractérisée en ce que**
placer la baguette de positionnement (2) sur le second panneau (1f) consiste à ce que au moins une patte de maintien (4) de l'élément de maintien (4, 15), vient prendre par derrière une partie du second panneau (1f).

15. Installation solaire selon l'une des revendications 10 à 14,
**caractérisée en ce que**
la mise en place de la baguette de positionnement (2) sur le second panneau (1f) consiste à ce que :
la patte arrière (3) est serrée avec une partie du second panneau (1f) à l'aide d'au moins une pince (15), et
de préférence le serrage de la patte arrière (3) avec une partie du second panneau (1f), consiste à replier une partie de la patte de maintien (4).
